# DEMANDE DE BREVET EUROPEEN

(11) **EP 1 621 111 A1**
(43) Date de publication de la demande: **01.02.2006**
(21) Numéro de dépôt: 05291586.5
(22) Date de dépôt: 25.07.2005
(51) Int. Cl.: A47C 7/26

(54) **Siège pour véhicule de transport en commun**

(30) Priorité: 28.07.2004 FR 0408343
(71) Demandeur: Compin, 75017 Paris (FR)
(72) Inventeur: Choupeaux, Steven, 27000 Evreux (FR); Bernard, Didier, 27930 Gravigny (FR); Behotte, Sylvain, 27300 Bernay (FR)
(74) Mandataire: Ramey, Daniel

(57) **Abrégé**

Siège pour véhicule de transport en commun, comprenant une assise, un dossier (110), et un revêtement (138) recouvrant une partie (112) de l'assise et du dossier (110), la partie recouverte (112) étant délimitée par une fente continue dans laquelle est introduit et fixé un bord périphérique du revêtement (138), et étant raccordée à une partie périphérique (114) non recouverte de l'assise (10) ou du dossier (110) par des nervures qui s'étendent transversalement par rapport à la fente (130) et qui sont formées sur la face interne du dossier (110) ou de l'assise (10).

## Description

La présente invention concerne un siège, en particulier pour véhicule de transport en commun, du type comprenant une assise, un dossier, et un revêtement posé sur au moins une partie de l'assise et/ou du dossier.

Un siège de ce type doit répondre à plusieurs exigences telles qu'une robustesse suffisamment importante pour une utilisation aussi longue que possible, un confort qui peut varier suivant le type des véhicules équipés de ces sièges et la durée moyenne des voyages effectués dans ces véhicules, et une réalisation simple de manière à réduire les coûts de production.

Dans une version simple et peu coûteuse de ce siège, destinée en particulier aux autobus et à certains véhicules ferroviaires, l'assise et le dossier du siège sont réalisés en matériau plastique. Pour améliorer le confort et l'aspect du siège, un revêtement éventuellement associé à un garnissage et à une nappe anti-lacération ou anti-vandalisme est posé et fixé sur l'assise et/ou le dossier du siège.

La pose et la fixation de ce revêtement par des techniques traditionnelles sont longues et coûteuses et augmentent le prix de revient du siège

La présente invention a essentiellement pour but d'apporter une solution simple, efficace et économique à ce problème.

Elle propose à cet effet un siège, en particulier pour véhicule de transport en commun, comprenant une assise, un dossier et un revêtement recouvrant au moins une partie de l'assise et/ou du dossier, caractérisé en ce que ladite partie recouverte est délimitée par une fente continue qui s'étend sur au moins une partie de la périphérie de cette partie recouverte et dans laquelle est introduit et fixé un bord périphérique du revêtement, et en ce que la partie recouverte est raccordée à une partie périphérique non recouverte de l'assise ou du dossier par des nervures qui s'étendent transversalement par rapport à la fente et qui sont formées sur la face inférieure ou face interne du dossier ou de l'assise.

La fente continue qui délimite la partie recouverte du siège selon l'invention permet d'y introduire une partie ou la totalité du bord périphérique du revêtement. Ainsi, le bord périphérique du revêtement n'est plus visible et accessible, ce qui permet de diminuer son usure et d'améliorer l'esthétique du siège.

La fixation du revêtement du siège selon l'invention est simple et peu coûteuse. Elle peut être réalisée par collage du revêtement sur la partie à recouvrir et dans la fente du siège. Des agrafes peuvent également être utilisées pour fixer le bord périphérique du revêtement sur une paroi de cette fente.

Les nervures transversales permettent de raccorder la partie périphérique non recouverte du dossier ou de l'assise à la partie recouverte et de renforcer le dossier ou l'assise.

La fente continue forme dans les nervures précitées des encoches dont la profondeur permet la réception du bord périphérique du revêtement. Ainsi les nervures de raccord et de renfort ne gênent pas l'introduction et la fixation du bord périphérique du revêtement dans la fente du dossier ou de l'assise.

La partie recouverte est par exemple en matériau plastique, qui comporte de moulage la fente et les nervures précitées.

Dans un mode de réalisation préféré de l'invention, la fente a une forme sensiblement en U et s'étend le long du bord avant et des bords latéraux et jusqu'au bord arrière de l'assise ou du dossier, respectivement.

Pour un bon confort, un garnissage, par exemple en matériau cellulaire, est interposé entre le revêtement et la partie à recouvrir, le garnissage pouvant être fixé sur la partie à recouvrir par exemple par collage ou analogue.

Afin d'augmenter la durée de vie du siège, une nappe anti-vandalisme ou anti-lacération peut-être interposée entre le revêtement et le garnissage et par exemple fixée sur le garnissage, par collage ou analogue.

Avantageusement, la fente comporte alors deux parties superposées ayant des largeurs différentes, la partie la plus large débouchant sur la partie recouverte et s'étendant le long du bord périphérique de la partie recouverte.

Cela permet de fixer le bord de la nappe anti-vandalisme ou anti-lacération dans la fente, par collage ou agrafage par exemple, sur la paroi radialement interne de la partie la plus large de la fente, puis d'introduire et de fixer le bord du revêtement dans la partie la moins large de la fente en recouvrant ainsi le bord de la nappe anti-vandalisme ou anti-lacération.

Le siège selon l'invention présente l'avantage d'offrir plusieurs niveaux de confort à partir d'une assise et d'un dossier standard, ces niveaux de confort étant adaptés à des véhicules de types différents, notamment des véhicules de transport public.

De plus, il est facile de remplacer ou rénover le revêtement du siège selon l'invention, soit en enlevant le revêtement usé et en posant un revêtement neuf à sa place, soit en conservant le revêtement usé et en posant par dessus un revêtement neuf. Dans ce dernier cas, le bord périphérique du revêtement neuf introduit et fixé dans la fente du dossier ou de l'assise recouvre celui du revêtement usé, à moins que celui-ci n'ait été préalablement découpé et enlevé de la fente.

L'invention propose également un outil de montage d'un revêtement sur un siège du type décrit ci-dessus, caractérisé en ce qu'il comprend une paroi annulaire mince à la forme de la fente de la partie de siège à recouvrir, cette paroi étant portée par un support mobile guidé à coulissement vertical au-dessus d'un support fixe portant ladite partie de siège, de sorte que, quand le revêtement est placé sur la partie de siège, le coulissement vertical vers le bas du support mobile vient encastrer le bord du revêtement, au moyen de ladite paroi annulaire mince, dans la fente de la partie du siège.

L'invention sera mieux comprise et d'autres détails, avantages et caractéristiques de l'invention apparaîtront à la lecture de la description suivante faite à titre d'exemple non limitatif en référence aux dessins annexés, dans lesquels :
- les figures 1 et 2 sont des vues schématiques en perspective du dossier et de l'assise, respectivement, d'un siège pour véhicule de transport en commun selon l'invention ;
- la figure 3 est une vue schématique de dessous de l'assise de la figure 2 ;
- la figure 4 est une vue schématique partielle en perspective du dessous de l'assise de la figure 2 ;
- la figure 5 est une vue schématique partielle en coupe transversale de l'assise du siège selon l'invention ;
- la figure 6 est une vue correspondant à la figure 5 et représente un revêtement posé sur l'assise ;
- la figure 7 est une vue correspondant à la figure 5 et représente un revêtement et une garniture élastique posés sur l'assise ;
- la figure 8 est une vue correspondant à la figure 5 et représente un revêtement, une garniture élastique et une nappe anti-vandalisme ou anti-lacération posés sur l'assise ;
- la figure 9 est une vue correspondant à la figure 8 et représente une variante de réalisation ; et
- la figure 10 est une vue schématique en perspective d'un outil de montage d'un revêtement sur un dossier de siège selon l'invention.

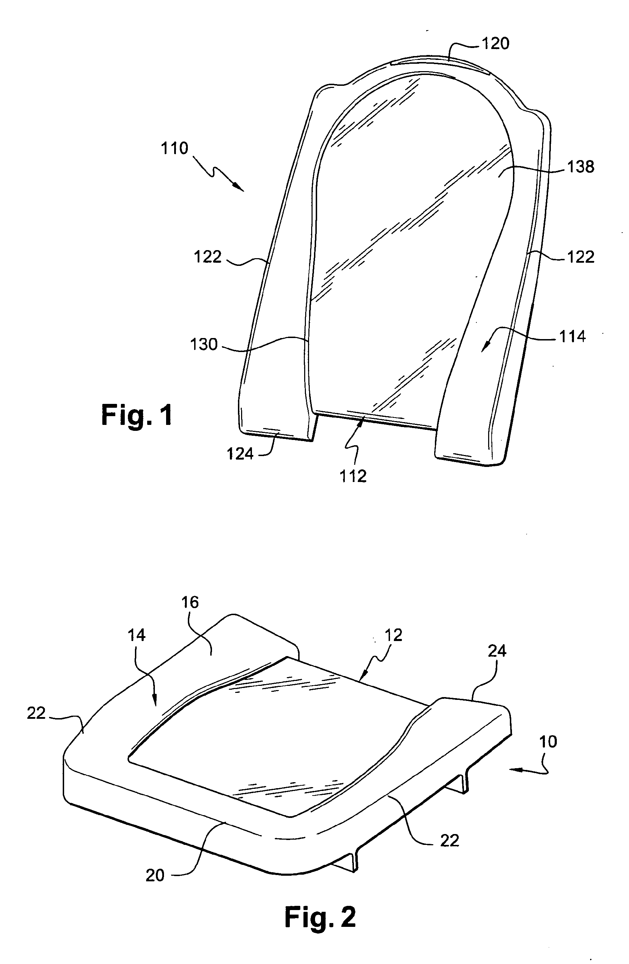

Un siège selon l'invention, en particulier pour véhicule de transport en commun, comprend une assise désignée par la référence 10 en figure 2 et un dossier désigné par la référence 110 en figure 1, qui sont montés fixement sur une structure de support non représentée qui est elle-même fixée par exemple à un piètement d'appui au sol et à des moyens de fixation à une paroi verticale.

L'assise 10, représentée aux figures 2 à 5, est formée d'une seule pièce en matériau plastique moulé par injection. Elle comporte une partie centrale 12 ayant une surface supérieure recouverte d'un revêtement du type tissu ou analogue qui est fixé sur celle-ci par exemple par collage et un rebord arrière vertical 18 s'étendant vers le bas depuis cette surface supérieure, et une partie périphérique 14 en U, entourant la partie centrale 12 et ayant une surface supérieure 16 légèrement concave et un rebord périphérique vertical s'étendant vers le bas depuis la surface supérieure 16. La partie 14 en U comprend un bord avant 20 et deux bords latéraux 22 s'étendant jusqu'au bord arrière 24 de l'assise 10.

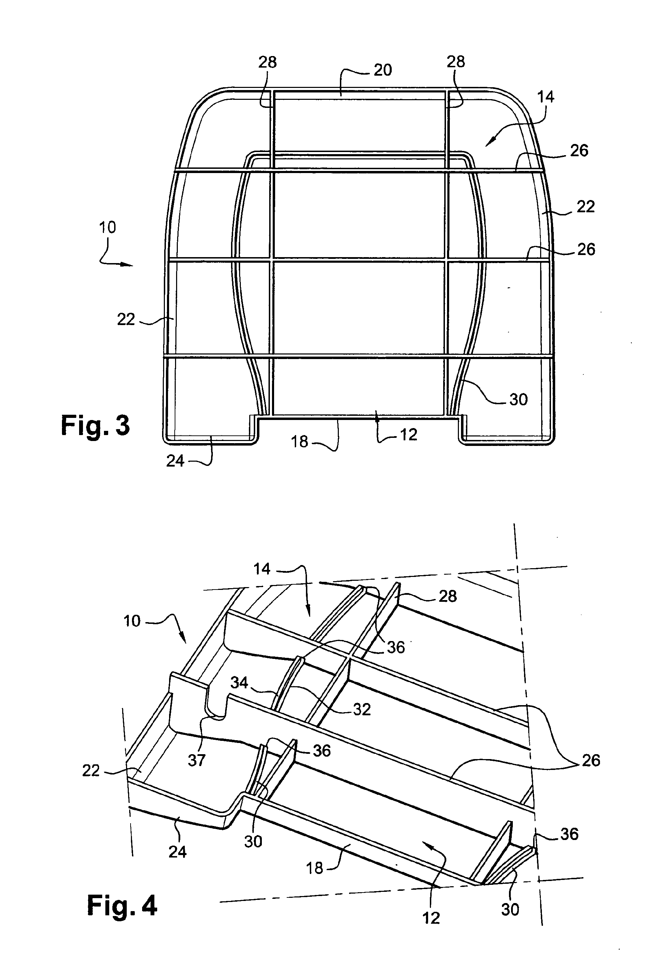

L'assise 10 est renforcée par des nervures 26, 28, par exemple transversales et longitudinales, qui sont formées sur sa face inférieure ou interne, comme cela est visible en figures 3 et 4.

La partie centrale 12 de l'assise 10 est délimitée par une fente continue 30 sensiblement en U qui la sépare de la partie périphérique 14 et qui s'étend le long du bord avant 20 et des bords latéraux 22 de la partie 14, jusqu'au bord arrière 24 de l'assise 10.

Cette fente 30 débouche à l'intérieur de l'assise 10 et est délimitée intérieurement par le bord 32 de la partie centrale 12 et extérieurement par un rebord vertical 34 de la partie périphérique 14.

Les nervures transversales et longitudinales 26, 28 sont traversées par la fente 30 qui y forme des encoches 36 dont les dimensions sont sensiblement égales à celles de la section transversale de la fente 30.

Certaines nervures comprennent, comme représenté en figure 4, des échancrures 37 en U débouchant vers le bas et destinées à recevoir des tubes métalliques ou analogues faisant partie de la structure de support du siège.

La fente 30 est destinée à recevoir au moins une partie du bord périphérique du revêtement tendu, disposé et fixé sur la partie centrale 12 de l'assise 10.

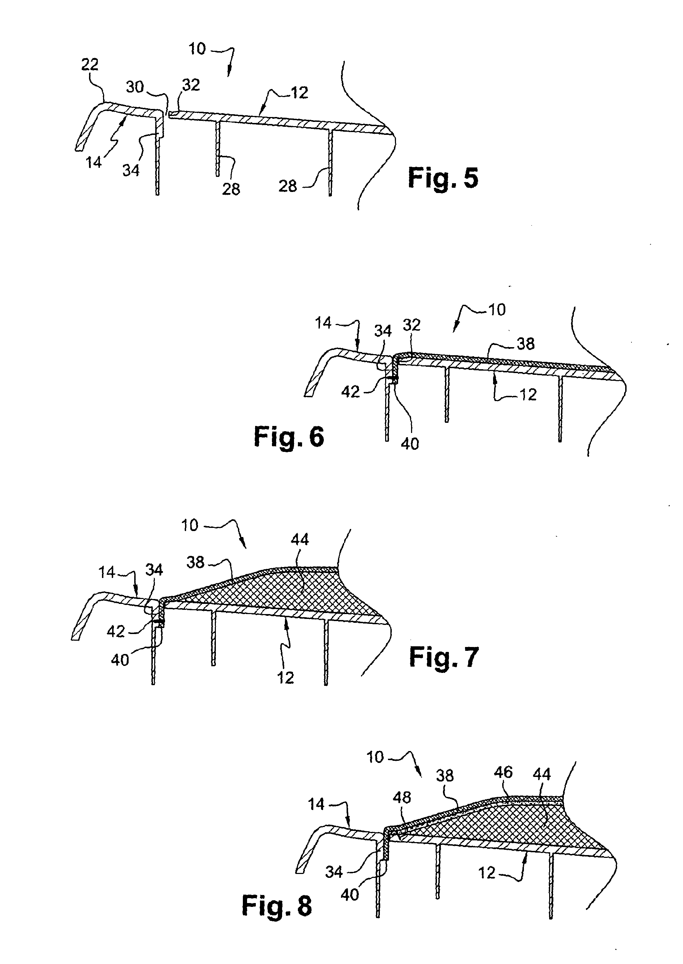

Dans le mode de réalisation illustré en figure 6, le revêtement 38 est une feuille de matière souple telle que de la toile ou du tissu par exemple, ayant la forme de la partie centrale 12 à recouvrir et des dimensions légèrement supérieures pour que ses bords avant et latéraux 40 puissent être introduits et fixés dans la fente 30, son bord arrière étant rabattu et fixé sur le rebord arrière 18 de la partie centrale 12 de l'assise 10.

La partie centrale du revêtement 38 est fixée sur la partie 12 de l'assise 10 par collage ou analogue. Le bord avant et les bords latéraux 40 du revêtement 38 sont introduits dans la fente 30 et fixés sur la paroi radialement externe de la fente 30, formée par le rebord vertical 34 de la partie périphérique 14, par collage et/ou au moyen d'agrafes 42 ou analogues.

Les agrafes 42 sont posées au moyen d'un outil approprié qui est manipulé du côté de la face interne ou inférieure de l'assise 10. L'absence de paroi radialement interne de la fente 30 permet de placer l'outil au plus près de la partie 12 de l'assise 10 pour la fixation du bord 40 du revêtement 38 sur la paroi radialement externe de la fente 30.

Les encoches 36 formées dans les nervures transversales et longitudinales 26, 28 assurent la continuité de la fente 30 et reçoivent également les bords avant et latéraux 40 du revêtement 38.

Avantageusement, le bord périphérique 40 du revêtement 38, qui est introduit dans la fente 30, sort de cette fente vers le bas, sous l'assise 10, et permet d'exercer une traction sur le revêtement 38 de façon à bien le tendre sur la partie 12 de l'assise 10. Après fixation du bord périphérique 40 du revêtement 38 sur la paroi externe de la fente 30, la partie de ce bord qui dépasse de la fente 30 vers le bas, est éliminée par découpe.

Cette réalisation de siège est par exemple destinée aux véhicules de transport en commun effectuant des trajets relativement courts pendant lesquels le confort du siège ne présente pas un caractère important.

Pour un meilleur confort, un garnissage 44 en matériau naturel ou synthétique, tel qu'un matériau cellulaire, est interposé entre le revêtement 38 et la partie centrale 12 de l'assise 10, comme représenté en figure 7 et peut être collé sur cette partie 12.

Dans la variante de réalisation de la figure 8, une nappe 46 anti-vandalisme ou anti-lacération est interposée entre le revêtement 38 et le garnissage 44. Cette nappe 46, qui comprend en général une armature métallique, résiste aux tentatives de lacération du revêtement 38 et du garnissage 44 du siège 10 et permet donc d'augmenter sa durée de vie. Ce type de nappe est connu de l'homme du métier et est décrit dans le document EP - A - 1 127 517 de la demanderesse.

Le garnissage 44 et la nappe 46 ont la forme de la partie centrale 12 à recouvrir et des dimensions sensiblement égales ou légèrement inférieures pour ne pas gêner l'introduction du bord périphérique 40 du revêtement 38 dans la fente 30 de l'assise 10. Ils sont fixés respectivement sur la partie 12 de l'assise 10 et sur le garnissage 44 par collage ou analogue. Le bord périphérique de la nappe 46 peut par exemple être fixé par des agrafes 48 sur le bord périphérique de la partie centrale 12 de l'assise 10.

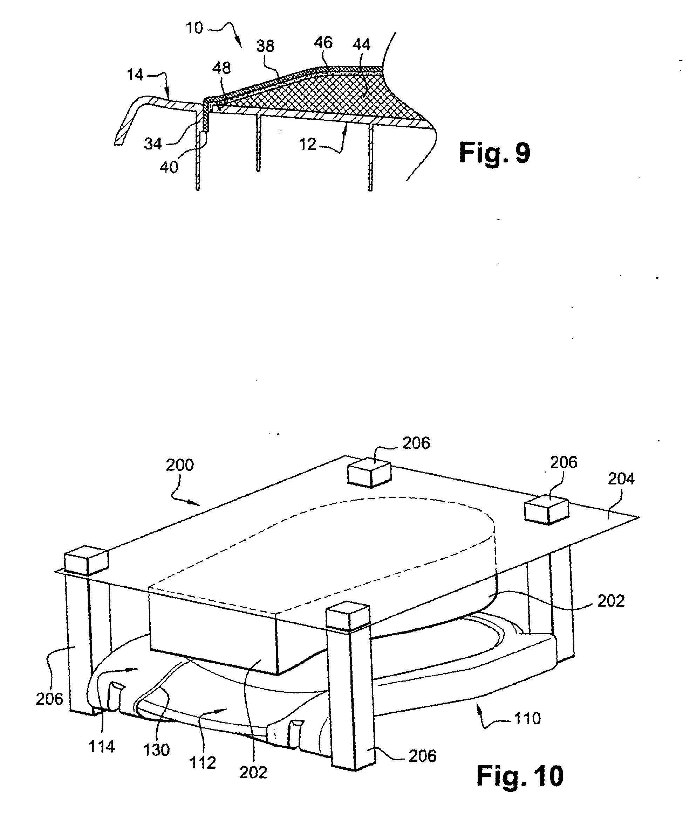

Dans une variante de réalisation de l'assise 10 du siège selon l'invention représentée en figure 9, la fente 30 est suffisamment large pour recevoir les bords périphériques de la nappe 46 et du revêtement 38.

Dans ce mode de réalisation, les dimensions de la nappe 46 sont légèrement supérieures à celles de la partie 12 à recouvrir pour que ses bords avant et latéraux puissent être introduits et fixés dans la fente 30, par exemple par agrafage.

Le dossier 110 de siège selon l'invention, représenté en figure 1, comporte également sur sa face avant une partie centrale 112 recouverte d'un revêtement 138 du type tissu ou analogue et une partie périphérique 114 en U, entourant la partie centrale 112.

Cette partie 112 est séparée de la partie périphérique 114 par une fente continue 130 s'étendant le long du bord supérieur 120 et des bords latéraux 122 de la partie périphérique 114, jusqu'au bord inférieur 124 de la face avant du dossier 110. Cette rainure 130 est destinée à recevoir au moins une partie du bord périphérique du revêtement 138 tendu, disposé et fixé sur la partie 112 de la face avant du dossier 110, comme déjà décrit en ce qui concerne l'assise du siège.

La figure 10 illustre un outil de montage d'un revêtement sur un dossier 110 de siège selon l'invention. L'outil 200 comprend une paroi annulaire mince 202 à la forme de la fente 130 qui délimite la partie centrale 112 du dossier 110 qui doit être recouverte d'un revêtement.

Le dossier 110 est monté sur un support fixe non représenté et la paroi mince 202 est portée par une plaque 204 qui est montée et guidée en coulissement vertical au-dessus de la partie 112 du dossier 110, sur quatre montants 206 fixes disposés aux coins de la plaque 204.

Pour la réalisation d'un siège comprenant une nappe anti-vandalisme ou anti-lacération, le bord périphérique de la nappe peut être introduit dans la fente 130 au moyen de cet outil et fixé, puis le bord périphérique 140 du revêtement 138 est introduit dans la fente 130 au moyen de l'outil et fixé par collage.

Le coulissement vertical de la plaque 204 vers le bas vient encastrer le bord périphérique du revêtement dans la fente 130 du dossier 110 au moyen de la paroi 202 annulaire mince.

Cet outil est bien entendu utilisable pour une partie de siège délimitée par une fente continue.

En variante, la fente formée autour de la partie centrale de l'assise ou du dossier peut être constituée par une rainure à fond fermé dans laquelle on introduit et on fixe, par exemple par collage, le bord du revêtement de la partie centrale. Par endroits, le fond de la rainure et éventuellement une de ses parois latérales sont interrompus pour permettre la fixation du bord du revêtement par agrafage comme représenté aux figures 6, 7 et 8.

## Revendications

1. Siège, en particulier pour véhicule de transport en commun, comprenant une assise (10), un dossier (110) et un revêtement (38, 138) recouvrant au moins une partie (12, 112) de l'assise (10) et/ou du dossier (110), **caractérisé en ce que** ladite partie recouverte (12, 112) est délimitée par une fente continue (30) qui s'étend sur au moins une partie de la périphérie de cette partie recouverte (12, 112) et dans laquelle est introduit et fixé un bord périphérique (40) du revêtement (38, 138), et **en ce que** la partie recouverte (12) est raccordée à une partie périphérique (14) non recouverte de l'assise (10) ou du dossier (110) par des nervures (26, 28) qui s'étendent transversalement par rapport à la fente (30) et qui sont formées sur la face inférieure ou face interne du dossier (110) ou de l'assise (10).

2. Siège selon la revendication 1, **caractérisé en ce que** ladite fente (30) forme dans les nervures (26, 28) précitées des encoches (36) dont la profondeur permet la réception du bord périphérique (40) du revêtement (38).

3. Siège selon la revendication 1 ou 2, **caractérisé en ce que** ladite partie recouverte (12) est en matériau plastique moulé et comporte de moulage la fente (30) et les nervures (26, 28) précitées.

4. Siège selon l'une des revendications précédentes, **caractérisé en ce que** la fente (30) précitée est sensiblement en U et s'étend le long du bord avant (20, 120) et des bords latéraux (22, 122), jusqu'au bord arrière (24, 124) de l'assise (10) ou du dossier (110), respectivement.

5. Siège selon l'une des revendications précédentes, **caractérisé en ce que** la fente (30) précitée comporte deux parties adjacentes ayant des largeurs différentes, la partie la plus large débouchant sur la partie recouverte (12, 112) et s'étendant le long du bord périphérique de la partie recouverte (12, 112).

6. Siège selon l'une des revendications précédentes, **caractérisé en ce que** le revêtement comprend une couche de tissu ou analogue, tendue sur la partie (12, 112) à recouvrir et dont le bord (40) est introduit dans ladite fente (30) et y est fixé, par exemple par collage ou par agrafage sur une paroi de cette fente (30).

7. Siège selon la revendication 6, **caractérisé en ce qu'**un garnissage (44), par exemple en matériau cellulaire, est interposé entre le revêtement (38, 138) et la partie recouverte (12, 112).

8. Siège selon la revendication 7, **caractérisé en ce qu'**une nappe anti-vandalisme ou anti-lacération (46) est interposée entre le revêtement (38, 138) et le garnissage (44).

9. Siège selon la revendication 8, **caractérisé en ce que** le bord de la nappe anti-vandalisme ou anti-lacération (46) est fixé dans la fente (30) par agrafage et est recouvert par le bord (40) du revêtement (38, 138) introduit dans ladite fente (30).

10. Outil (200) de montage d'un revêtement (38, 138) sur un siège du type décrit dans l'une des revendications précédentes, **caractérisé en ce qu'**il comprend une paroi annulaire mince (202) à la forme de la fente (30) de la partie (12, 112) de siège à recouvrir, cette paroi (202) étant portée par un support mobile par rapport à un support fixe portant ladite partie (12, 112) de siège, de sorte que, le revêtement (38, 138) étant déposé sur la partie (12, 112) de siège, le déplacement du support mobile vers le support fixe vient encastrer le bord (40) du revêtement (38, 138), au moyen de ladite paroi annulaire mince (202), dans la fente (30) de la partie (12, 112) de siège.
